# EUROPEAN PATENT APPLICATION

(11) **EP 2 123 545 A1**
(43) Date of publication of application: **25.11.2009**
(21) Application number: 09100287.3
(22) Date of filing: 21.05.2009
(51) Int. Cl.: B62H 3/00

(54) **Clamp to store bicycles**

(30) Priority: 21.05.2008 NL 1035451; 20.05.2009 NL 2002913
(71) Applicant: Minck, Lodewijk Petrus Maria, NL-2181 VG Hillegom (NL)
(72) Inventor: Minck, Lodewijk Petrus Maria, NL-2181 VG Hillegom (NL)
(74) Representative: Assendelft, Jacobus H.W.

(57) **Abstract**

The invention relates to a clamp to store a bike. The clamp has two bifurcated parts (3, 4) which simultaneously pivot around a horizontal axis (2) extending parallel to the axis (6) of the wheel (1) and is present at a level equal to the top of the wheel and in front of the wheel. The bifurcated parts (3, 4) limit sideways motion of the wheel. A spring (5) tries to move the clamp open (arrow B). The front wheel rests onto a sloping surface (9) such that it moves the clamp closed (arrow A).

## Description

The proposal is a device such as a clamp with which a bicycle can be stored in a stable manner. This clamp is particularly (however not exclusively) designed for a (possibly (fully) automatic device ("storage machine) "to store a number of bicycles/bikes, e.g. designed as a carousel system.

The clamp is designed to engage a wheel of the bike, preferably the front wheel which is generally direction controlled, e.g. by way of a stir. Preferably the clamp has one or more of the following features: is movable, preferably pivotable, between a release position and a retain position; can pivot around a substantial horizontal axis which preferably extends substantially parallel to the axis of the wheel and is preferably present at a level above the level of the axis of the wheel, more preferably substantially at equal level with the top of the wheel and preferably in front of the axis of the wheel, more preferably in front of the wheel; moves from the retaining position automatically back to the release position, e.g. by preload of a resilient element or a convenient location of the point of gravity by e.g. providing the clamp with a counter weight; has a first part to co operate with the bike to move the clamp between the release position and the retain position, e.g. such that the inserting motion of the bike into the storage provides the driving movement for this motion of the clamp, wherein this first part preferably engages a wheel, preferably the front wheel, preferably a front side of the front wheel, preferably at a level substantially equal to the level of the axis of the wheel; has a second part that due to motion of the clamp from the release to the retain position engages the wheel, preferably front wheel, preferably an upward directed part of the wheel, preferably at a level substantially equal to the top of the wheel; has a third part which in the release and/or retain position of the clamp partly or completely limits sideways movement of the wheel, preferably to both sides; the first and second part are each provided with a third part, e.g. such that a substantially U or V or bifurcated shape is provided or a different shape providing in a plane at three sides a confinement for the relevant part of the bike, such as wheel, and at the fourth side is open to allow inserting of the wheel, between the two opposite sides, such as legs into which at least the circumferential part of the wheel, such as rim of tire, fits; the first and/or second part, possibly combined with the third part, is designed such that in the release and/or retain position the relevant part of the bike, such as wheel, can be moved into or out said part according to the insertion direction of the bike into the storage or opposite to it and/or is oriented such that in the retain position the part faces down or back; is substantially made from rod like material of preferably metal; engages in the retain position the wheel at least at two spaced locations along the circumference; during passage from the retain to the release position the second part releases from the bike before the first part (or vice versa) ; has a feature to preload the bike into the insertion direction into the storage if the clamp is in the release and/or retain position; the clamp can take different attitudes in the retain position to automatically adapt to different dimensions of the bike and/or wheel; in the retain position the first and/or second part are kept forced against the bike; the pivot axis is outside the wheel; the clamp is preloaded such that from the retain position the first and/or second part moves upward and/or the first and/or second part backward moves from the bike; between the release and retain position the clamp pivots over an angle between 20 and 40 or 60 degrees; in the release position pivoting away from the retain position is arrested by a fixed limit; the clamp can co operate with a bike with wheels with a (possibly minimum) rim dimension of one or more of 20, 24, 26, 27 and 28 inch or each dimension in between.

In a preferred embodiment the clamp comprises one or more of the following features: two at a distance around a common pivot point forcedly commonly moving, substantially U of V shaped parts, between the legs of which the wheel rim fits; in the retain position the first part is in front of the front wheel approximately at the level of the wheel axis and is directed to the back of the bike and presses in the direction of the back of the bike against the wheel and/or the second part is directed downward and presses down onto the wheel; the bike rests with one or both wheels onto an in forward direction of the bike downward sloping supporting surface to preload the bike in forward direction; a spring or counter weight or other preload means tries to pivot the clamp from the retain position such that the first part moves upward and the second part moves to the back of the bike.

This clamp is particular effective has a high reliability and simplicity and in a storage provided with it bikes with different dimensions can be stored, without the need for adapting the clamp. The clamp provides no obstruction for a part or accessory of the bike, like a bike basket mounted to the stir and above the front wheel.

Preferably care is taken such that a bike located in the clamp experiences a preload directed opposite to the direction into which the bike is removed from the storage. This is e.g. obtained by giving the through shaped body into which the front and back wheel are located, such an attitude and/or shape that with the aid of gravity this effect is obtained. E.g. by taking care that the part of the supporting face (e.g. the through) onto which the front and/or back wheel rests in the according to the regulations stored bike, slopes downward in the direction into which the bike is driven into the storage. To limit building height, it can be convenient to provide the through with at least two parts oppositely sloping. In a preferred embodiment the through comprises at least three parts of which two slope in the same direction (to bear the front and back wheel, respectively) and a third part oppositely slopes. Said third part is preferably present between the two in the same direction sloping parts.

The enclosed drawing shows non limiting examples.
Fig. 1 shows a side view and top view of the housing of a single storage, designed as carousel.
Fig. 2 shows in side and top view the housing of three stacked carousels.
Fig. 3-5 show in top view clusters of four, six and eight six cornered carousels.
Fig. 6 shows in perspective a clamp of the invention.
Fig. 7 shows a side view of a schematic drawing.
Fig. 8 and 9 show in perspective a clamp of the invention.
Fig. 10 and 11 show in side view a clamp of the invention.
Fig. 12 and 15 show in perspective a clamp of the invention.
Fig. 13 and 14 show in side view a clamp of the invention.

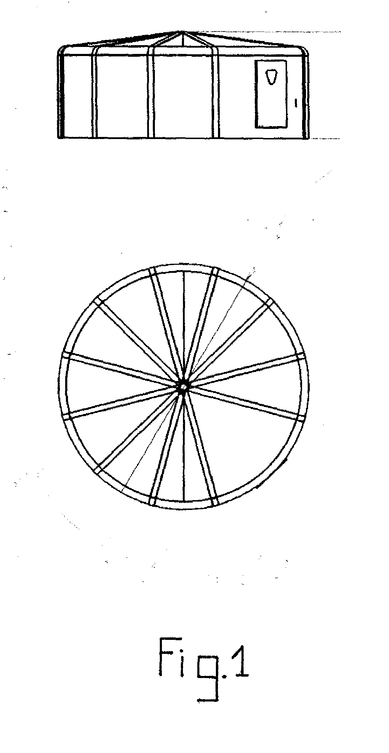

The in fig. 1 shown housing contains from the in top view central mid point radially extending, elongated through shaped elements at approximately the level of ground level, into which the wheels of a bike can ride. These through shaped elements extend to close to the side wall of the housing. Close to the in top view central mid point each through shaped element is associated with a clamp according to the invention.

The through shaped elements keep mutually a fixed angular spacing and are within the plane that they determine (as a rule a horizontal plane) rotated around the in top view central mid point, such that each time the desired through shaped element is brought in front of the entrance opening.

The with a door closed single access opening in the side wall of the housing is shown.

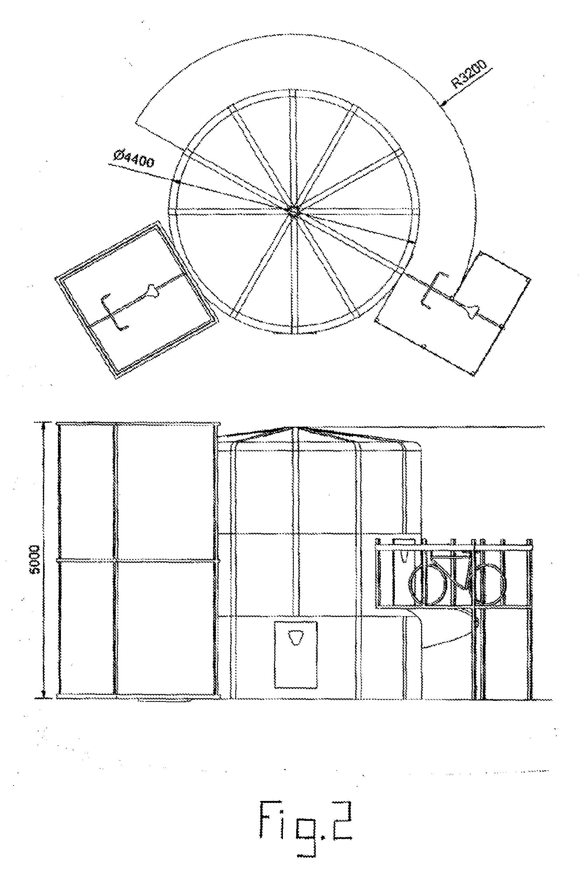

In fig. 2 three carousels are stacked. The access openings at the different levels are not straight above each other and keep mutually a horizontal distance of at least the width of an access opening.

In the top view of fig. 2 a bike is schematically shown; within the elevator shaft with the front wheel outward directed; at the platform at the end of the ramp with the front wheel inward directed.

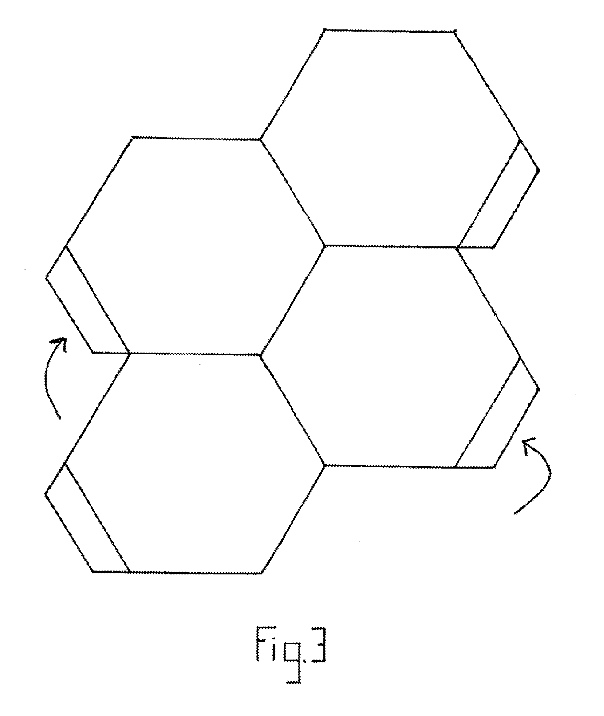

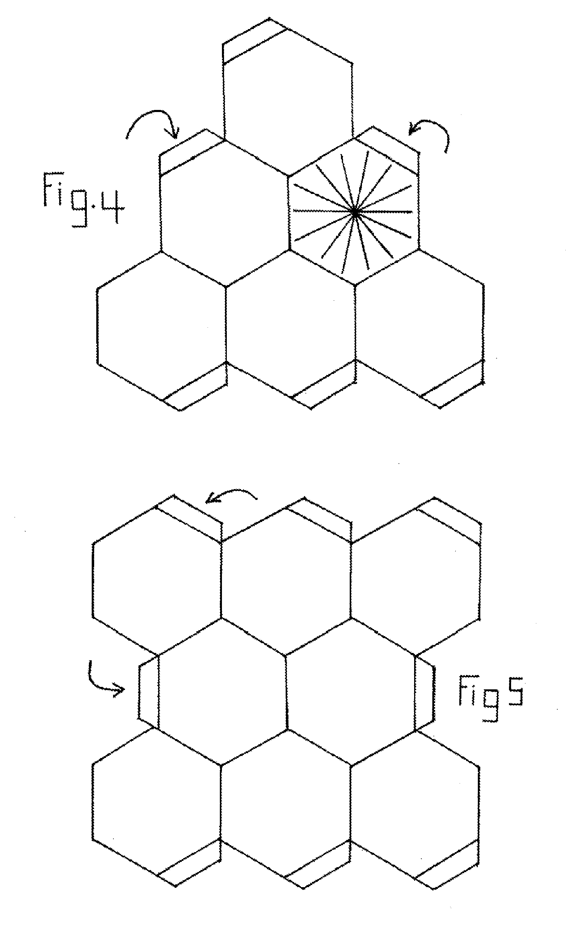

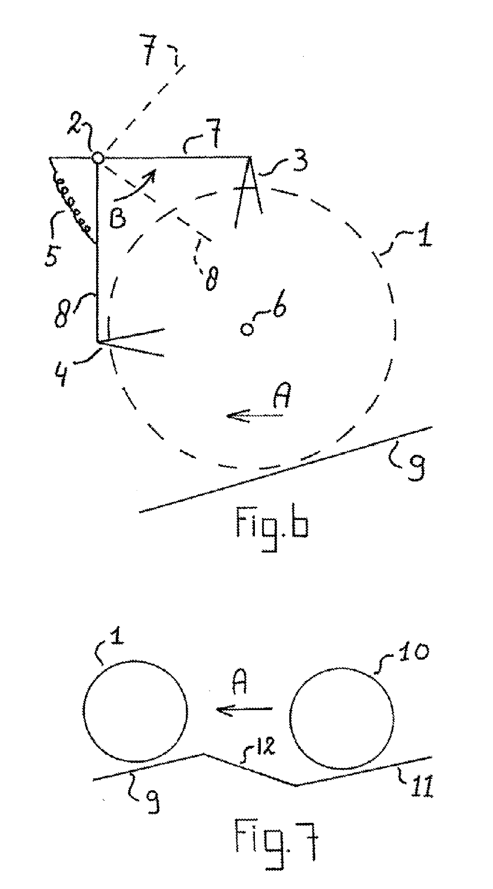

Fig. 3-5 show in top view clusters of four, six and eight six angled carousels. Fig. 3 shows a cluster of four carousels, each with an access opening and five side walls. Each carousel offers room to fourteen bikes which each fit between two radially extending, horizontal bars (only in fig. 4 shown for one of the carousels). Between two bars there is a clamp according to fig. 6 present. Fig. 4 shows a cluster of six carousels, each identical to that of fig. 3. Fig. 5 shows a cluster of eight carousels, in three rows; two rows of three and one row of two carousels, each identical to that of fig. 3.

The location of the access door, of which the location is indicated in fig. 3-5 by an arrow, can differ.

Fig. 6 shows in perspective the clamp of the invention and in phantom the front wheel 1 with rotation axis 6 of the bike. The clamp has two parts 3, 4 which press downward and backward, respectively (opposite to the forward direction according to arrow A) against the top and front, respectively, of the wheel. The parts 3, 4 are U shaped and between the legs the wheel rim is housed. The parts 3, 4 are through 7 and 8 mutually in attitude fixed and pivot around axis 2. A tension spring 5 tries to pivot the parts 3, 4 from the shown retain position into the direction of arrow B (anti clockwise) to the release position in which the part 3 is spaced from the wheel 1 and releases the wheel 1 (7 and 8 shown dashed). The wheel 1 rests onto a forward (arrow A) downward sloping bearing face 9 such that the bike tries to ride forward.

In case of a wheel 1 of smaller diameter the clamp can from the in continuous line shown position pivot further clockwise (opposite arrow B) until part 3 starts to rest onto the wheel. In case of a wheel 1 of larger diameter, part 3 will rest onto the wheel before arriving from the dashed position into the in continuous line shown position. During parking a bike the wheel 1 will first contact with its front the part 4 and carries it with in its forward motion, such that the clamp pivots around axis 2 and part 3 moves down.

Fig. 7 shows front wheel 1 and back wheel 10 of a bike in the storage. Both wheels bear onto an own in forward direction downward sloping substrate 9 and 11, respectively, such that the bike tries to ride forward (arrow A). There between an opposite sloping support 12 is present, such that the front wheel during entering and leaving the storage is continuously supported.

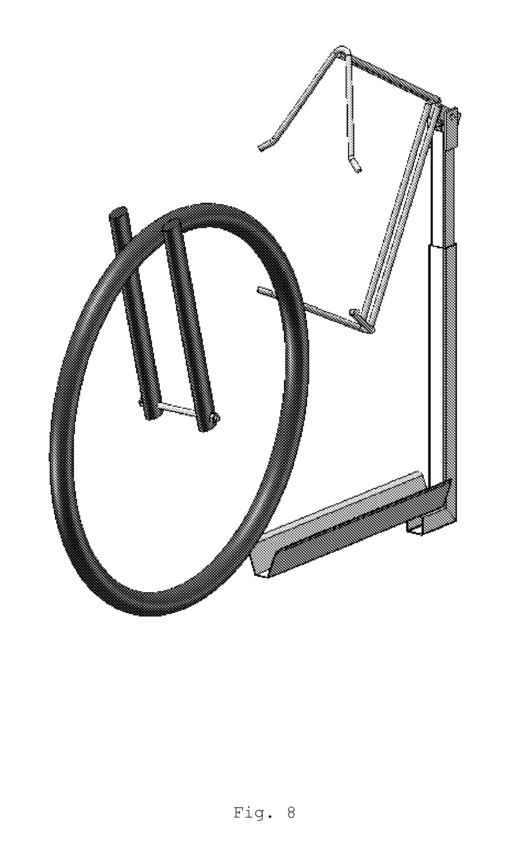

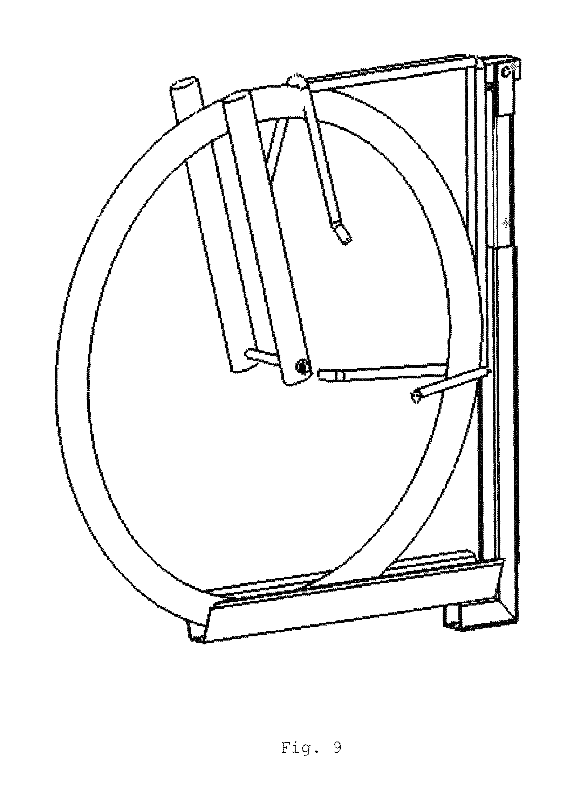

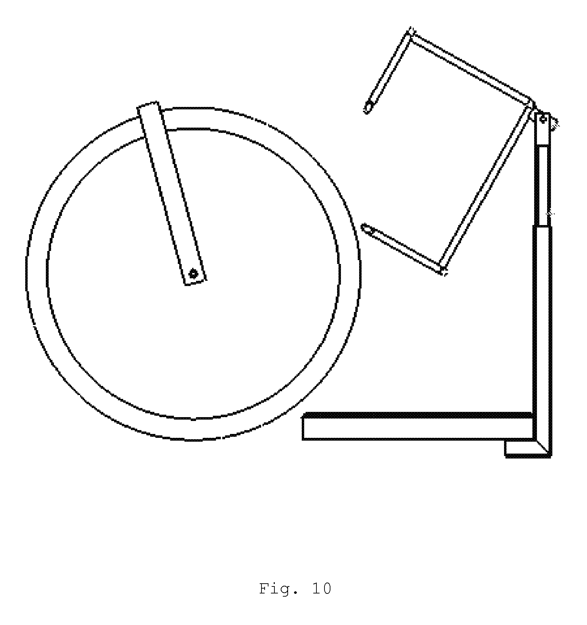

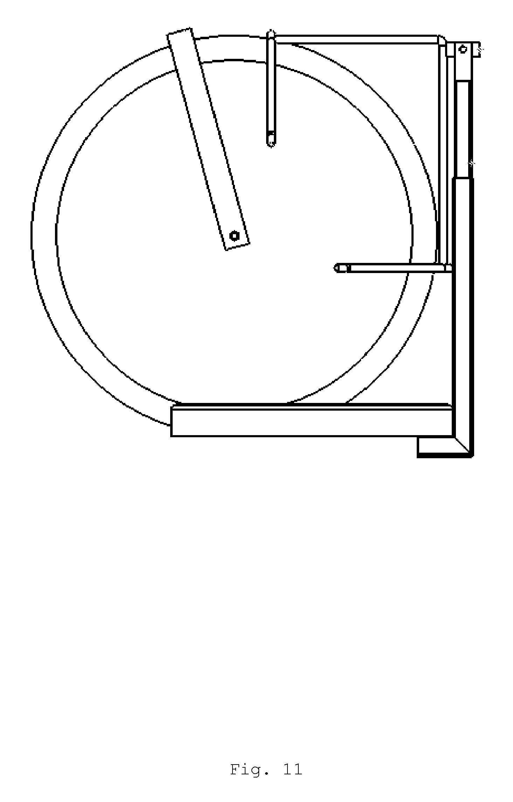

Fig. 8-11 show again the clamp of fig. 6, made of rods. In fig. 8 and 10 the clamp is open and the front wheel is remote from it. In fig. 9 and 11 the clamp is closed and the front wheel is clamped by it.

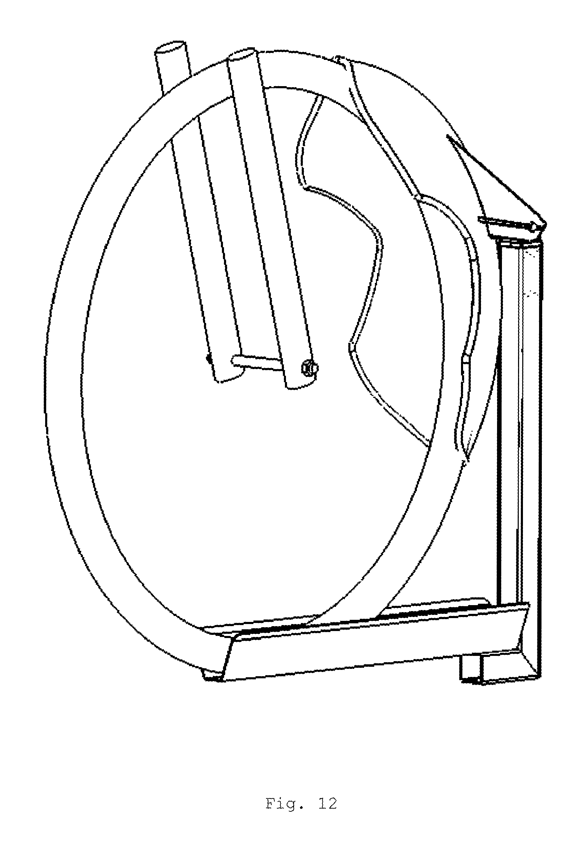

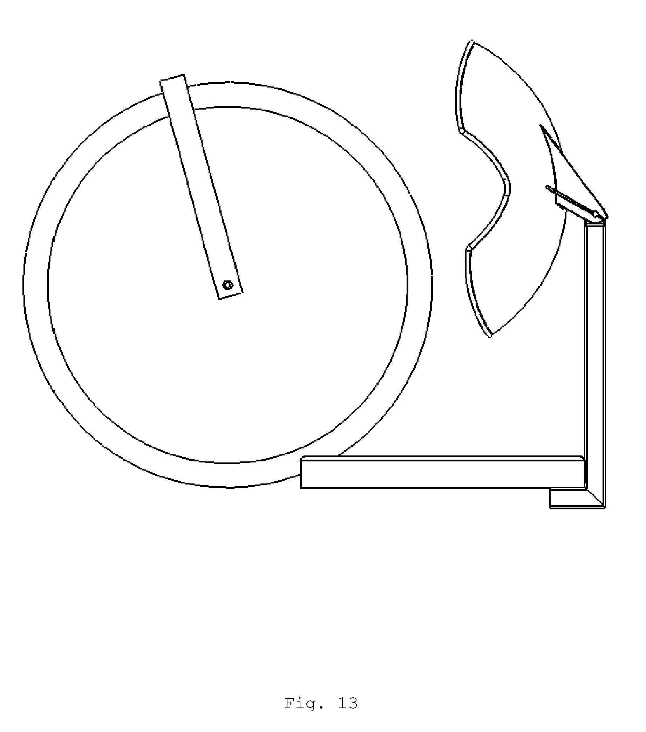

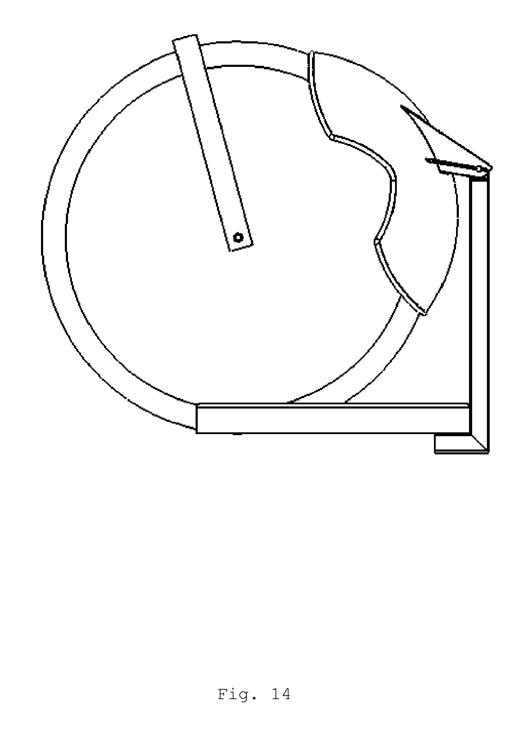

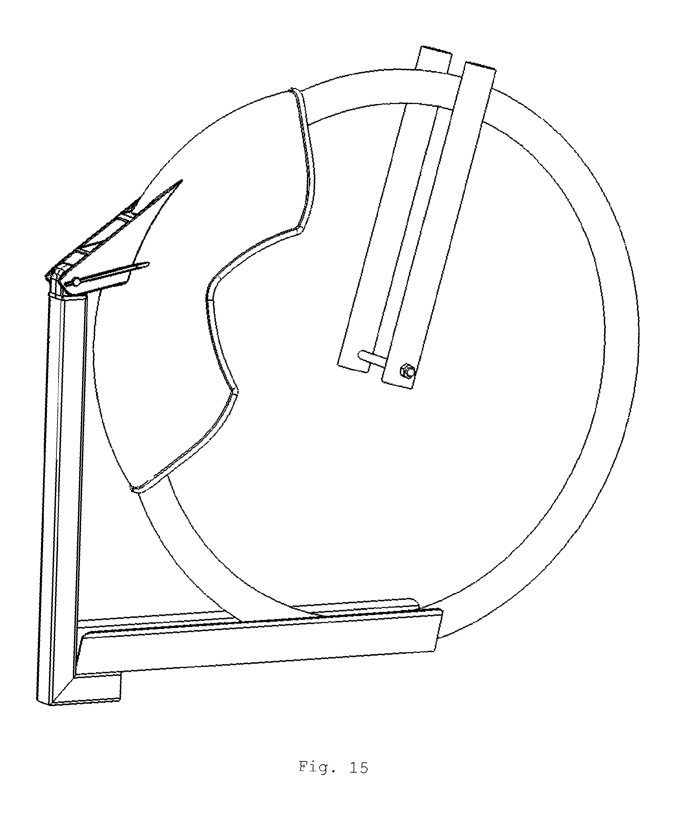

Fig. 12-15 show an alternative for the clamp of fig. 6, now made as a Shell part of plastic. In fig. 12, 14 and 15 the clamp is closed and the front wheel is clamped in it. In fig. 13 the clamp is opened and the front wheel is remote from it.

Also other embodiments are feasible. E.g. the preload for the clamp is provided by a torsion spring as alternative to the tension spring 5. The clamp can partly or completely be made of plastic or polymer material, e.g. reinforced with fibres of e.g. glass or carbon. The housing can be provided with solar panels to provide energy for the operation of the storage. For each bike a lock can be present to lock the bike to the storage.

## Claims

1. Storage with in it a bike of which a part, preferably the front wheel, is clamped in a clamp, wherein the clamp comprises: pivot means to pivot between a release position and a retain position around a substantially horizontal axis (2) that substantially parallel to the axis (6) of the wheel (1) extends and preferably is present at a level above the axis of the wheel; and
around the axis (2) pivoting first and second engagement means (3, 4) which in the retain position at two spaced locations engage the bike to retain it.

2. Storage according to claim 1, wherein the axis (2) is substantially at equal level with the top of the wheel and/or is present in front of the wheel; and/or there is a preload element (5) to preload the clamp from the retain position towards the release position.

3. Storage according to claim 1 or 2, the first and/or second means (3, 4) has a U or V shaped part, with the opening backward from the bike directed and engaging around the front of the wheel at a level substantially equal to the level of the axis (6) of the wheel or with the opening downward directed and engaging around an upward directed part of the wheel at a level substantially equal to the top of the wheel.

4. Storage according to claim 1, 2 or 3, with a means (4) to move the clamp from the release position to the retain position, such that the insertion motion of the bike into the storage provides the propulsion for this motion of the clamp.

5. Storage according to any of claims 1-4, wherein the clamp has means (3, 4) into which the wheel fits such that sideways motion of the wheel in both directions is limited both in the retain position and in a from the retain position towards the release position moved position.

6. Storage according to any of claims 1-5, wherein the clamp is designed such that at transition from the retain to the release position:
the second means (3) releases earlier from the bike than the first means (4); and/or
the second means (3) moves upward and the first means (4) moves backwards from the bike.

7. Storage according to any of claims 1-6, comprising a feature (9) to preload the bike in the insertion direction (arrow A) into the storage.

8. Storage according to claim 7, the bike bears with one or both wheels onto an in forward direction of the bike downward sloping bearing surface (9) to preload the bike in forward direction.

9. Storage according to claim 7 or 8, the bearing surface has at least two parts that slope oppositely, preferably wherein the bearing surface has at least three parts of which two (9, 11) slope in the same direction and bear the front (11) and back wheel (10), respectively, while a third, intermediate, part (12) slopes oppositely.

10. Clamp for the storage according to any of claims 1-9.
